# EUROPÄISCHE PATENTSCHRIFT

(11) **EP 4 188 574 B1**
(45) Veröffentlichungstag und Bekanntmachung des Hinweises auf die Patenterteilung: **05.06.2024**
(21) Anmeldenummer: 21769467.8
(22) Anmeldetag: 01.09.2021
(51) Int. Cl.: B01D 29/11, A47J 31/60, B01D 29/96, B01D 35/027, C02F 1/00, B01D 35/153, B01D 27/08

(54) **WASSERTANK MIT FILTERPATRONE**
WATER TANK WITH FILTER CARTRIDGE
RÉSERVOIR D'EAU POURVU D'UNE CARTOUCHE FILTRE

(30) Priorität: 03.09.2020 DE 102020123009; 22.03.2021 DE 102021107068
(43) Veröffentlichungstag der Anmeldung: 07.06.2023
(73) Patentinhaber: ACLARIS GmbH, Lindau Zweigniederlassung Rebstein, 9445 Rebstein (CH)
(72) Erfinder: WALLERSTORFER, Kurt, 5204 Strasswalchen (AT)
(74) Vertreter: Otten, Roth, Dobler & Partner mbB Patentanwälte
(86) Internationale Anmeldenummer: PCT/EP2021/074146
(87) Internationale Veröffentlichungsnummer: WO 2022/049132

(56) Entgegenhaltungen:
- WO-A1-2010/102690
- WO-A2-2008/017492
- DE-A1-102015 007 692
- US-A1- 2006 054 547

## Beschreibung

Die Erfindung betrifft einen Wassertank nach dem Oberbegriff des Anspruchs 1.

In wasserführenden Haushaltsmaschinen mit einem Wassertank, insbesondere in Getränkemaschinen, wie Kaffeemaschinen, Teemaschinen, etc., werden regelmäßig Filterpatronen eingesetzt, um die Wasserqualität entsprechend der vorgesehenen Anwendung zu verbessern. Häufig werden in solchen Filterpatronen Filtermedien zur Wasserenthärtung, wie z.B. Ionentauscherharz, oder zur Geschmacksverbesserung, wie z.B. Aktivkohle, verwendet. Auch die dosierte Zugabe von Zusatzstoffen, z.B. für die Gesundheit oder Geschmacksverbesserung, wie die Zugabe von Mineralien oder Vitaminen, etc., wird bereits in Kombination mit Filtermedien vorgesehen.

Wassertanks derartiger Maschinen nach dem Stand der Technik weisen regelmäßig am Tankboden Tankanschlusselemente mit einer ringförmige Tankdichtfläche zum dichten Anschluss eines Filteranschlusselementes der für einen solchen Tank vorgesehenen Filterpatrone auf, die eine Tankdurchgangsöffnung im Tankboden zum Durchfluss des Wassers aus der Filterpatrone und dem Wassertank zur Haushaltsmaschine umschließen.

Solche Wassertanks und Filterpatronen sind beispielsweise in den Druckschriften DE 10 2004 049 877 A1, EP 1 867 606 A1 und DE 197 17 054 C2 beschrieben.

Um zu verhindern, dass ungeeignete Filterpatronen zum Einsatz kommen, wurden die Tankanschlusselementen bereits mit Kodierungselementen versehen, so dass nur zu diesen Kodierungselementen passende Filterpatronen zum Einsatz kommen können.

In der Druckschrift US 2006/0054547 A1 wird ein Filter mit einem zentralen Standrohr offenbart, das eine radiale Öffnung aufweist, die durch ein Kontrollventil geöffnet oder geschlossen wird.

In bestimmten Ausführungen, die in den Druckschriften WO 2008/017492 A2, EP 2 433 906 B1, EP 2 063 972 B1, EP 2 049 220 B1, EP 2 049 221 B1 und EP 2 049 218 B1 offenbart sind, wurde auch eine polygonförmige Form der Dichtungen und Tankdichtflächen zur Kodierung verwendet, so dass mit der Dichtung selbst neben der Dichtfunktion auch eine zusätzliche Kodierungsfunktion ausgeübt wird. In einer Ausführungsform ist ein Bypass vorhanden, dessen Querschnitt durch die Winkelposition der Filterpatrone veränderbar ist.

Diese Ausführungen haben den Nachteil, dass durch die eckige Kontur die Dichtfunktion gegenüber einer runden Kontur schwieriger zu realisieren ist.

Aufgabe der Erfindung ist es daher, einen solchen Wassertank und eine alternative Filterpatrone vorzuschlagen, bei der der Bezug von gefiltertem Wasser aus dem Wassertank nur mit passender Filterpatrone ermöglich ist.

Diese Aufgabe wird ausgehend von einem Wassertank und einer Filterpatrone nach dem Oberbegriff des Anspruchs 1 durch dessen kennzeichnende Merkmale gelöst.

Im Folgenden werden allgemein dem Wassertank zuzuordnende Elemente mit dem zuordnenden Wortanfang "Tank" und der Filterpatrone zuzuordnende Elemente mit dem zuordnenden Wortanfang "Filter" versehen. Merkmale vorteilhafter Ausführungen und Weiterbildungen der Erfindung werden im Folgenden so beschrieben, dass sie nicht zwingend vorhanden sind, jedoch vorhanden sein können.

Ein erfindungsgemäßer Wassertank mit erfindungsgemäßer Filterpatrone zeichnet sich dadurch aus, dass tankseitig ein die Tankdichtfläche umgehender Wasserdurchlass von außerhalb der Tankdichtfläche nach innen zur Tankdurchgangsöffnung vorgesehen ist, der durch ein Verschlusselement beim Einsetzen der Filterpatrone verschließbar ist. Ein solches Verschlusselement stellt also ein Kodierungselement dar, um die Verwendung ungeeigneter Filterpatronen zu verhindern. Ohne Verschluss dieses Wasserdurchlasses wird ungefiltertes Wasser unter Umgehung der Filterpatrone weitergeleitet. Sowohl der Wasserdurchlass als auch das zugehörige Verschlusselement können dabei für unterschiedliche Filterpatronen und/oder Wassertanks unterschiedlich ausgebildet und so unterschiedlich kodiert werden.

In einer vorteilhaften Weiterbildung der Erfindung weist dabei die Tankdichtfläche entlang ihrem Umfang einen variierenden Radius gegenüber einer zentralen Achse auf, so dass die Tankdichtfläche radiale Einbuchtungen und/oder radiale Ausbuchtungen umfasst, wobei die Ausbuchtungen und/oder Einbuchtungen einen runden Verlauf aufweisen.

In ein solches Tankanschlusselement kann ein filterseitiger Filteranschlussstutzen mit entsprechender Form eingesteckt werden. Durch die Form der wechselnden umfangseitigen Krümmungen ist beim Einstecken des Filteranschlussstutzens in das Tankanschlusselement mit der radial nach innen weisenden Tankdichtfläche im Wesentlichen über den gesamten Umfang die gewünschte Dichtwirkung zu erzielen.

Die Tankdichtfläche kann passend zu einer Filterdichtfläche einer Filterpatrone so ausgebildet sein, dass die ringförmige Tankdichtfläche eine zur zentralen Achse der Tankdurchgangsöffnung hinweisende Innenfläche eines Tankanschlusselementes bildet.

Für die Verwendung einer Filterpatrone, bei der die Einbuchtungen und/oder Ausbuchtungen der Filterdichtfläche periodisch um eine Kreislinie oszillierend ausgebildet sind, werden auch die Einbuchtungen und/oder Ausbuchtungen Tankdichtfläche passend zur Filterdichtfläche periodisch um eine Kreislinie oszillierend ausgebildet.

Zur Anpassung an eine entsprechend geformte Filterdichtfläche können auch auf Seiten der Tankdichtfläche sechs Einbuchtungen und sechs Ausbuchtungen entlang einer Kreislinie mit einem Durchmesser kleiner 3cm vorgesehen sind.

Das ringförmige Tankanschlusselement umfasst eine ringförmige Elastomerdichtung, in der die radialen Ausbuchtungen und/oder radialen Einbuchtungen vorgeformt angebracht sind. Ein solches Tankanschlusselement ist insbesondere in Verbindung mit einer Filterpatrone von Vorteil, deren ringförmiger Filteranschlussstutzen im Bereich der Filterdichtfläche aus einem bei Betriebstemperatur formfesten Kunststoff besteht. Die Elastomerdichtung gibt dem formfesten Kunststoff auf Seiten der Filterpatrone beim Einstecken der Filterpatrone nach.

Die Elastomerdichtung weist bevorzugt an der Innenseite der radialen Ausbuchtungen und/oder radialen Einbuchtungen die gegenüber der Filterpatrone dichtende Tankdichtfläche auf.

Weiterhin ist es von Vorteil, wenn die Tankdichtfläche der Elastomerdichtung einen von oben nach unten zur zentralen Achse hinführenden schrägen Verlauf aufweist. Dieser Verlauf führt dazu, dass die Elastomerdichtung im Verlaufe des Einsteckvorgangs der Filterpatrone zunehmend elastisch nach außen verformt wird und durch die dadurch erzeugte Rückstellkraft ein Anpressdruck entsteht, der für die gewünschte Dichtwirkung sorgt.

Durch eine Verformung einer Elastomerdichtung können neben der Fixierfunktion und der Dichtfunktion auch eine oder mehrere weitere Funktionen bewirkt werden. Dies kann beispielsweise auch eine hydraulische Funktion, wie eine Ventil- oder Bypassfunktion zum Schließen oder Öffnen des erfindungsgemäßen Durchlasses oder dergleichen sein.

Für die Verwendung einer Elastomerdichtung ist es von Vorteil, wenn der Tankboden einen Befestigungsring und eine in den Befestigungsring eingefügte Elastomerdichtung umfasst. Der außenliegende Befestigungsring verhindert dann ein Aufweiten der Elastomerdichtung, so dass die elastische Rückstellkraft des Elastomers nahezu vollständig zur Erzeugung des Anpressdrucks zur Verfügung steht.

Um einen Durchfluss zwischen dem Befestigungsring und der Elastomerdichtung zu vermeiden, kann die Elastomerdichtung eine Dichtfläche zum dichten Abschluss der Elastomerdichtung gegenüber dem Befestigungsring aufweisen. Weiterhin kann die Elastomerdichtung eine Dichtfläche zum dichten Abschluss des Befestigungsrings gegenüber dem Tankboden aufweisen.

Der erfindungsgemäße Wasserdurchlass ist als ein Bypasskanal für ungefiltertes Wasser im Tankboden vorgesehen, der aus dem Wassertankinnenraum durch den Befestigungsring und durch die Elastomerdichtung verläuft. Hierdurch ist ein Abfluss aus dem Wassertank möglich, wenn keine

Filterpatrone eingesetzt ist. Ein solcher Abfluss kann benötigt werden, wenn keine Filterpatrone zur Hand ist oder ein Betrieb ohne Filterpatrone erforderlich ist, z.B. in einem Wartungsbetrieb wie der Reinigung oder Entkalkung der zugehörigen Maschine. Die in solchen Fällen verwendeten Reinigungs- oder Entkalkungsmittel sollten nicht in eine Filterpatrone gelangen.

Der Bypasskanal kann beispielsweise einen Ringspalt in der Elastomerdichtung umfassen, so dass ein über den Umfang verteilter Wasserdurchfluss in die Ausgangsleitung erfolgt.

Bevorzugt umfasst die Elastomerdichtung ein Verschlusselement, mittels dem der Bypasskanal insbesondere durch das Einstecken der Filterpatrone in die Elastomerdichtung verschließbar ist. Dadurch kann der Bypass bei Verwendung einer passenden Filterpatrone ohne weitere Maßnahmen geschlossen werden.

Die Elastomerdichtung kann beispielsweise so geformt sein, dass das Verschlusselement zwei gegenüberliegende ringförmige Dichtflächen im Ringspalt umfasst, durch die der Ringspalt bei Verformung der Elastomerdichtung verschließbar ist. Wird von den beiden ringförmigen Dichtflächen die innere Dichtfläche bei Einsetzen einer Filterpatrone in die Elastomerdichtung aufgeweitet, so ist ein Formschluss mit der äußeren ringförmigen Dichtfläche zu bewirken, wobei der Bypasskanal geschlossen wird.

Der Befestigungsring kann zur einfachen Befestigung des Befestigungsrings und/oder der Elastomerdichtung am Tankboden ein Rastelement zur Verrastung mit dem Tankboden umfassen.

Weiterhin kann am Tankboden ein Zentrierelement zum Einführen in die Filterpatrone vorgesehen sein. Mittels eines solchen Zentrierelementes kann eine Führung beim Einsetzen einer Filterpatrone in die korrekte Betriebsposition erfolgen. Darüber hinaus kann mit dem Zentrierelement durch dessen Formgebung auch eine weitere Kodierung vorgenommen werden, um sicherzustellen, dass nur geeignete Filterpatronen zum Einsatz kommen. Zudem kann mit einem solchen Zentrierelement auch eine Fixierfunktion ausgeübt werden, beispielsweise gegen ein Verdrehen oder Verkippen der Filterpatrone. Das unbeabsichtigte Lösen der Filterpatrone kann auch durch entsprechende Reibungsflächen verhindert werden, so dass bei der Entnahme der Filterpatrone eine entsprechende Reibungskraft zu überwinden ist. Es können am Zentrierelement auch zusätzliche Fixierelemente angebracht werden.

Zur Verbindung des Zentrierelementes mit der Elastomerdichtung kann das Zentrierelement eine Bodenplatte aufweisen, die in einer Aufnahme der Elastomerdichtung liegt und diese randseitig hintergreift. Damit ist das Zentrierelement durch die Elastomerdichtung am Tankboden befestigt.

Sofern ein Bypass von ungefiltertem Wasser vorgesehen ist, kann das Zentrierelement beispielsweise in der Bodenplatte eine Bypassöffnung aufweisen, die zum zentralen Abfluss hin offen ist.

Das Zentrierelement umfasst bevorzugt einen von der Bodenplatte des Zentrierelementes nach oben abstehenden Zentrierdorn, der eine ringförmige Außenfläche aufweist, die einen variierenden Radius gegenüber der zentralen Achse aufweist, so dass die Außenfläche radiale Einbuchtungen und/oder radiale Ausbuchtungen umfasst. Ein solcher Zentrierdorn ist an die Außenkontur der Elastomerdichtung und des Filteranschlussstutzens der zugehörigen Filterpatrone angepasst.

In einer bevorzugten Ausführung der Erfindung sind die Einbuchtungen und/oder Ausbuchtungen der Außenfläche des Zentrierdorns periodisch um eine Kreislinie oszillierend ausgebildet. Diese Ausbildung entspricht der Form einer entsprechenden Elastomerdichtung und lässt somit nur einen Ringspalt mit den Einbuchtungen und/oder Ausbuchtungen frei zum Einführen einer passenden Filterpatrone. Diese Ausgestaltung verhindert also die Verwendung einer anderweitig geformten Anschlussgeometrie innerhalb der Elastomerdichtung und verbessert so die Kodierung. Zudem kann so auf der Innenseite des Filteranschlussstutzens entlang dessen Ausbuchtungen und/oder Einbuchtungen eine Abstützung des Filteranschlussstutzens erfolgen, um die Elastomerdichtung beim Einsetzen der Filterpatrone auf der gegenüberliegenden Außenseite zuverlässig zu verformen.

Die Einbuchtungen und/oder Ausbuchtungen der Außenfläche des Zentrierdorns können zur Anpassung an die Form der Elastomerdichtung und/oder des Filteranschlussstutzens einen runden Verlauf aufweisen.

Bei entsprechenden Verlauf der Elastomerdichtung und/oder des Filteranschlussstutzens sind zur Anpassung des Zentrierdorns in dessen Außenfläche sechs Einbuchtungen und sechs Ausbuchtungen entlang einer Kreislinie mit einem Durchmesser kleiner 3cm vorgesehen.

Oberhalb der Außenfläche mit den Einbuchtungen und/oder Ausbuchtungen wird in einer vorteilhaften Ausführung eine Abstufung und ein nach innen versetzt angeordneter Vorsprung vorgesehen, der weiter in die Filterpatrone eingeführt wird und somit eine größere axiale Führungslänge bietet.

Zur Verhinderung einer axialen Abdichtung auf dieser Abstufung durch eine nicht geeignete Filterpatrone kann oberhalb der ringförmigen Außenfläche wenigstens ein in der Verlängerung der Umfangsfläche nach oben stehender Zahn angeordnet werden.

Oberhalb der ringförmigen Außenfläche kann wenigstens eine zur Tankdurchgangsöffnung führende Durchlassöffnung im Zentrierelement vorgesehen werden, die den Wassereinlass in die Filterpatrone mit dem Wasserauslass verbindet und nur durch eine erfindungsgemäß dichtende Filterpatrone geschlossen ist.

Die axiale Führung und Zentrierung kann dadurch verbessert werden, dass oberhalb der ringförmigen Wand wenigstens eine Führungsrippe im Zentrierelement vorgesehen ist. Neben dieser Führungsrippe oder im Falle mehrerer Führungsrippen zwischen diesen ist dabei ein Wasserdurchfluss möglich. Diese Führungsrippen können beim Aufstecken einer Filterpatrone in den o.a. Führungsnuten geführt werden.

Eine weitere Führungshilfe zum zentrierten Einsetzen der Filterpatrone ergibt sich dadurch, dass die Führungsrippe oder die Führungsrippen an der Oberseite zur zentralen Achse hin abgeschrägt sind. An diesen Abschrägungen kann der Filteranschlussstutzen beim Aufstecken entlanggleiten, bis er in die zentrierte Position gelangt.

Die Elastomerdichtung kann auch eine Dichtfläche zum dichten Abschluss des Befestigungsrings gegenüber dem Tankboden aufweisen, um sicherzustellen, dass aus dem Wassertank kein unerwünschtes Wasser über den Befestigungsring an der Filterpatrone vorbeifließt.

Der Befestigungsring kann zudem ein Rastelement zur Verrastung des Befestigungsrings mit dem Einlegeteil oder mit dem Tankboden umfassen. Hiermit ist die Montage des Befestigungsrings erleichtert. Sofern das Zentrierelement wie o.a. auch durch den Befestigungsring gehalten wird, ist auch dessen Montage und ggf. auch die Montage des darunter befindlichen Wassertankventils vereinfacht.

Die Ausgestaltung des Wassertanks wird vereinfacht, wenn am Tankboden ein zum Tankboden gehörendes Einlegeteil vorgesehen ist, das die wassertankseitig zum Anschluss der Filterpatrone vorgesehenen Teile umfasst. Durch ein Einlegeteil können verschiedene Anschlussstrukturen bei der gleichen Wassertankgestaltung leicht hergestellt werden, indem unterschiedliche Einlegeteile verwendet werden. Zudem können so verschiedene Anforderungen an die Fertigungstoleranz beim Wassertank und dem jeweiligen Einlegeteil gewählt werden.

Ein solches Einlegeteil kann dabei in vorteilhafter Weise die Elastomerdichtung und/oder den Befestigungsring und/oder das Zentrierelement und/oder wenigstens teilweise den Bypasskanal umfassen. Alle wesentlichen Tankanschlussstrukturen lassen sich am Einlegeteil vorsehen, so dass die Anpassung des Wassertanks an eine bestimmte Filterpatrone nur durch Auswahl des passenden Einlegeteils erfolgen kann.

In einem Wassertank gemäß der Erfindung wird eine Filterpatrone verwendet, die an die Tankdichtfläche angepasst ist. So wird in einer solchen Filterpatrone die Filterdichtfläche derart weitergebildet, dass der Verlauf der Filterdichtfläche entlang dem Umfang eines ringförmigen Filteranschlussstutzens einen variierendem Radius gegenüber einer zentralen Achse aufweist, so dass die Filterdichtfläche entsprechend der Tankdichtfläche radiale Ausbuchtungen und/oder radiale Einbuchtungen umfasst, wobei die Ausbuchtungen und/oder Einbuchtungen einen runden Verlauf aufweisen, so dass Ecken oder Kanten vermieden werden. Der Filteranschlussstutzen kann zugleich als Betätigungselement zum Verschluss des Bypasses dienen.

Durch diese Gestaltung des Filteranschlussstutzens bestehen weitere Möglichkeiten der Kodierung. Die Form der Filterdichtfläche passt zu einer korrespondierenden Form einer Tankdichtfläche, wobei durch die im Verlauf des Umfangs von außen nach innen und umgekehrt wechselnden Krümmungen das Aufspannen oder Eindrücken einer in der Form nicht angepassten Formdichtung auf oder in eine feste tankseitige Anlagefläche erschwert oder ganz verhindert ist.

Die Dichtwirkung der Filterdichtfläche mit der Tankdichtfläche wird durch einen runden Verlauf der Ausbuchtungen und/oder Einbuchtungen verbessert, so dass Ecken oder Kanten vermieden werden. Durch den runden Verlauf unter Vermeidung von Ecken oder Kanten im Bereich der Dichtflächen wird, beispielsweise gegenüber Polygonformen wie im Stand der Technik, die Dichtfunktion verbessert. Auch eine Verbesserung der mechanischen Klemmung und damit der Fixierung ist durch den variierenden Radius beispielsweise auch gegenüber einer Kreisform möglich.

Die radialen Ausbuchtungen und/oder Einbuchtungen bilden zudem die Form einer Ringfeder nach, deren Umfang federnd geweitet oder zusammengedrückt werden kann. Dabei verbessert die Federwirkung auch die Dichtwirkung, da durch den Federdruck die Filterdichtfläche an die zugehörige Tankdichtfläche flächig angedrückt wird. Die Filterdichtfläche und die Tankdichtfläche können auch zum Fixieren der Filterpatrone dienen und bilden dann ein Filterfixierfläche oder eine Tankfixierfläche. Diese Fixierfunktion im Zusammenwirken der Filterdichtfläche und der Tankdichtfläche wird durch eine solche Federwirkung verbessert.

Die federnde Verformbarkeit der Filterdichtfläche kann dadurch verbessert werden, dass der die Filterdichtfläche aufweisende ringförmige Filteranschlussstutzen des Filteranschlusselementes im Bereich der Filterdichtfläche eine ringförmige Wand mit einer Wandinnenseite und einer Wandaußenseite aufweist, die parallel oder zueinander geneigt verlaufen. Je nachdem ob der Anschlussstutzen auf eine Tankfixierfläche aufgesteckt oder in eine Tankdichtfläche eingesteckt wird, umfasst oder bildet entweder die Wandaußenseite oder die Wandinnenseite der ringförmigen Wand die Filterdichtfläche.

Da in dieser Ausbildung die der Filterdichtfläche gegenüberliegende Seite der Wand die gleiche Form mit entsprechend größerem oder kleinerem Umfang aufweist, ist diese Wand insgesamt als Ringfeder ausgebildet. Die ringförmige Wand bildet dann eine Ringfeder mit parallelen oder zueinander geneigten Umfangsseiten.

Der die Filterdichtfläche aufweisende ringförmige Filteranschlussstutzen des Filteranschlusselementes kann wenigstens im Bereich der Filterdichtfläche aus einem bei Betriebstemperatur gegenüber einem Elastomer formfesteren Kunststoff bestehen. Durch diese Festigkeit ist der Filteranschlussstutzen der Filterpatrone in der Lage, ohne beeinträchtigende Formveränderung einen Anpressdruck auf eine tankseitige Tankdichtfläche auszuüben, um den dichten Anschluss herzustellen.

Ein solcher formfester Kunststoff ist fester als ein Elastomer, so dass mit dem Filteranschlussstutzen eine Elastomerdichtung auf der Wassertankseite verformbar ist. Hierdurch kann ein Anpressdruck erzeugt werden. Durch eine Verformung einer Elastomerdichtung können auch eine oder mehrere weitere Funktionen der Elastomerdichtung bewirkt werden, beispielsweise eine mechanische oder hydraulische Funktion, wie eine Fixierfunktion, eine Ventil- oder Bypassfunktion oder dergleichen.

Dies ist beispielsweise dann von Vorteil, wenn die Filterdichtfläche eine von einer zentralen Achse der Filterauslassöffnung wegweisenden Außenfläche des ringförmigen Filteranschlussstutzens des Filteranschlusselementes bildet. Ein solcher Filteranschlussstutzen ist trotz der wechselnden umfangseitigen Krümmungen in der Lage, beim Einstecken in eine wassertankseitige Wassertankdichtung mit dementsprechend radial nach innen weisender Tankdichtfläche im Wesentlichen über den gesamten Umfang einen Anpressdruck nach außen auszuüben, um die gewünschte Dichtwirkung und/oder Fixierwirkung zu erzielen.

In einer Weiterbildung der Erfindung ist die Anordnung der Ausbuchtungen und Einbuchtungen der Filterdichtfläche drehsymmetrisch über den Umfang ausgebildet. Dadurch ergibt sich eine gleichmäßig über den Umfang verteilte Rückstellkraft der Ringfeder mit einer stabileren Fixierung und Dichtung der Filterpatrone in montierter Position. Eine drehsymmetrische Ausbildung der Filterdichtfläche über den Umfang ergibt sich dann, wenn die Ausbuchtungen und/oder Einbuchtungen periodisch um eine Kreislinie oszillierend ausgebildet sind. Dadurch sind verschiedene Winkelpositionen der Filterpatrone möglich, wodurch deren Anschluss erleichtert wird. Zudem können auch weitere technische Funktionen winkelabhängig vorgesehen werden.

Eine stabilere Fixierung der Filterpatrone in der Einbauposition wird dadurch erreicht, dass die Anordnung der Ausbuchtungen und Einbuchtungen der Tankdichtfläche und/oder der Filterdichtfläche mit gleichen Winkeln über den Umfang ausgebildet ist. Die so gebildete Ringfeder kann sich so gleichmäßig über den Umfang sowohl im Bereich der Ausbuchtungen als auch im Bereich der Einbuchtungen verformen.

Die Ausbuchtungen und Einbuchtungen der Filterfixierfläche können eine Wellenform entlang einer Kreislinie bilden, wobei die Wellenform aus einer alternierenden Abfolge von konvexen, die Ausbuchtungen bildenden Kreissegmenten und konkaven, die Einbuchtungen bildenden Kreissegmenten besteht. Durch den einer Kreislinie folgenden Verlauf ergibt sich eine radial gerichtete Federwirkung.

Die Federwirkung der Ringfeder kann weiter verbessert werden, wenn die konkaven und konvexen Kreissegmente in Wendepunkten beim Übergang zwischen konkaven und konvexen Krümmungen tangential verbunden sind.

In einer bestimmten Ausführung der Erfindung ist die Bogenlänge der konvexen Kreissegmente länger, als die Bogenlänge der konkaven Kreissegmente. Der überstrichenen Winkel der konvexen Kreissegmente ist also größer als der überstrichene Winkel der konkaven Kreissegmente. Dadurch verläuft der tangentiale Übergang zwischen den Krümmungen schräg gegenüber einem Mittelkreis der Ringfeder, so dass in den Übergängen keine radial nach innen oder außen gerichtete Kraft bei der Verformung entsteht.

In einer bestimmten Ausführungsform weisen die konvexen und die konkaven Kreissegmente den gleichen Segmentradius auf. Dadurch ergibt sich innerhalb der Segmente eine vergleichbare Kraftverteilung bei der Verformung.

Die Kreissegmente können so angeordnet werden, dass die konvexen und die konkaven Kreissegmente innerhalb eines äußeren Hüllkreises und außerhalb eines inneren Hüllkreises liegen, wobei die Kreismittelpunkte der konvexen Kreissegmente innerhalb des inneren Hüllkreises und die Kreismittelpunkte der konkaven Kreismittelpunkte außerhalb des äußeren Hüllkreises liegen. Diese Form ergibt einen flachen Verlauf gegenüber den Hüllkreisen bzw. einer Mittellinie der zwischen den Hüllkreisen verlaufende Kreissegmente, wodurch das Weiten oder Schrumpfen der Ringfeder erleichtert wird.

Eine gute Funktion hat sich dann gezeigt, wenn der Radius des inneren Hüllkreises zwischen 5% und 15% des Radius des äußeren Hüllkreises beträgt.

Weiterhin hat sich als vorteilhaft erwiesen, wenn der Radius der konvexen und/oder konkaven Kreissegmente zwischen 20% und 35% des Radius des äußeren Hüllkreises beträgt.

Der Federwirkung eines solchen Federringes kommt es weiterhin entgegen, wenn die Wandstärke zwischen der Wandaußenseite und der hierzu parallel oder geneigt verlaufenden Wandinnenseite zwischen 7% bis 10 % des Radius des äußeren Hüllkreises beträgt.

Zudem hat sich ein Verlauf dann als vorteilhaft gezeigt, wenn die Wendepunkte zwischen den Krümmungen der konkaven und konvexen Kreissegmente näher an dem inneren Hüllkreis als an dem äußeren Hüllkreis liegen.

Die Filterdichtfläche kann eine von einer zentralen Achse der Filterauslassöffnung wegweisende Außenfläche des ringförmigen Filteranschlussstutzens des Filteranschlusselementes bilden. Ein solcher Filteranschlussstutzen ist trotz der wechselnden umfangseitigen Krümmungen in der Lage, beim Einstecken in eine wassertankseitige Öffnung mit dementsprechend radial nach innen weisender Tankfixierfläche im Wesentlichen über den gesamten Umfang einen federnden Anpressdruck nach außen auszuüben, um die gewünschte Dicht- und/oder Fixierwirkung zu erzielen. Umgekehrt kann auch beim Aufstecken auf einen wassertankseitigen Tankanschlussstutzen mit dementsprechend radial nach außen weisender Tankdichtfläche durch eine radial nach innen weisende Filterdichtfläche im Wesentlichen über den gesamten Umfang ein federnder Anpressdruck nach innen ausgeübt werden, um die gewünschte Dicht- und/oder Fixierwirkung zu erzielen.

In einer besonderen Ausführungsform der Erfindung ist sowohl auf der Innenseite als auch auf der Außenseite des der Filteranschlussstutzens eine Filterfixierfläche vorgesehen, von denen eine oder beide zugleich eine Filterdichtfläche bilden. Ein solcher Filteranschlussstutzen kann in einen tankseitigen Ringschlitz eingeführt werden, dessen Seitenwände jeweils eine Tankfixierfläche und/oder Tankdichtfläche bilden.

Eine sehr gut funktionierende Konstellation hat sich beispielsweise gezeigt, wenn sechs Ausbuchtungen und sechs Einbuchtungen entlang einer Kreislinie vorgesehen sind, die einen Durchmesser kleiner 3cm aufweist.

Die Filtereinlassöffnung der Filterpatrone kann auf der Außenseite des Filteranschlussstutzens als ringförmige Sieböffnung ausgebildet werden, wodurch die Filterpatrone im Wassertank für das darin befindliche Wasser offen ist.

Eine Verbesserung der Filterpatrone ergibt sich dann, wenn innerhalb des Filteranschlussstutzens eine Führungsstruktur zur Führung und Aufnahme eines wassertankseitigen Zentrierelementes vorgesehen ist. Damit kann die Filterpatrone beim Einsetzen in den zugehörigen Wassertank in axialer Richtung ausgerichtet und in der Betriebsposition in dieser Ausrichtung fixiert werden.

Weist die Führungsstruktur wenigstens eine in axialer Richtung verlaufende, also parallel zur zentralen Achse verlaufende Führungsnut zur Aufnahme wenigstens einer Führungsrippe des Wassertankseitigen Zentrierelementes auf, so kann über diese Führungsstruktur in Wechselwirkung mit dem zugehörigen wassertankseitigen Zentrierelementes die Filterpatrone mit der axialen Bewegung beim Einsetzen in den Wassertank in wenigstens eine Winkelpositionen geführt und dort zusätzlich fixiert werden.

Um eine Führung und Fixierung in mehreren Winkelpositionen vorzusehen, kann die Führungsstruktur hierzu mehrere umfangsseitig verteilte Führungsnuten aufweisen.

Eine gute Führung der Filterpatrone in die gewünschte Winkelposition ergibt sich dann, wenn die Wandung der Führungsnuten derart gerundet ist, dass die Nutenbreite bezogen auf die Betriebsstellung sich von unten oben verjüngt. Die Führung der Filterpatrone kann zudem verbessert werden, wenn die Wandung der Führungsnuten derart gerundet ist, dass die Nutenbreite sich radial von innen nach außen verjüngt. In Kombination der beiden sich verjüngenden Nutenformen ergibt sich eine Art Trichtereffekt für eine in eine solche Nut eintretende Rippe eines Wassertankseitigen Zentrierelementes.

Die genannten Nutenformen können beispielsweise mittels Innenwölbungen in einer die Führungsnuten verbindenden Wandung der Führungsstruktur ausgebildet werden.

Die erfindungsgemäße Form der Filterdichtfläche kann auch zur Verbesserung der Fixierung der Filterpatrone dienen, indem die Filterdichtfläche zugleich als Filterfixierfläche vorgesehen wird. Die erfindungsgemäße Form der als Filterfixierfläche vorgesehenen Filterdichtfläche erleichtert eine Verformung des Filteranschlussstutzens im Bereich der Filterfixierfläche, da die radialen Ausbuchtungen und/oder Einbuchtungen die Form einer Ringfeder ausbilden, deren Umfang federnd geweitet oder zusammengedrückt werden kann. Durch eine solche durch den variierenden Radius erleichterte Verformung ist eine Verbesserung der mechanischen Klemmung und damit der Fixierung beispielsweise im Vergleich mit einer Kreisform oder einer Polygonform möglich.

Die federnde Verformbarkeit der Filterfixierfläche kann dadurch verbessert werden, dass der die Filterfixierfläche aufweisende ringförmige Filteranschlussstutzen des Filteranschlusselementes im Bereich der Filterfixierfläche eine ringförmige Wand mit einer Wandinnenseite und einer Wandaußenseite aufweist, die parallel oder zueinander geneigt verlaufen. Je nachdem ob der Anschlussstutzen auf eine Tankfixierfläche aufgesteckt oder in eine Tankfixierfläche eingesteckt wird, umfasst oder bildet entweder die Innenfläche oder die Außenfläche der ringförmigen Wand die Filterfixierfläche.

Da in dieser Ausbildung die der Filterfixierfläche gegenüberliegende Seite der Wand die gleiche Form mit entsprechend größerem oder kleinerem Umfang aufweist, ist diese Wand insgesamt als Ringfeder ausgebildet. Die ringförmige Wand bildet dann eine Ringfeder mit parallelen oder zueinander geneigten Umfangsseiten.

Weiterhin kann der ringförmige Filteranschlussstutzen des Filteranschlusselementes eine Außen- und/oder eine Innenwand aufweist, die gegenüber der Vertikalen abgeschrägt ist, so dass die Außenwand und die Innenwand bezogen auf die Betriebsposition der Filterpatrone von oben nach unten zusammenlaufen. Hierdurch ergibt sich eine Führungshilfe, die das Einführen des Anschlussstutzens in einen Spalt zwischen zwei passend geformten tankseitigen Flächenerleichtert, wobei die tankseitigen Flächen wenigstens teilweise eine innere und/oder äußere Tankdichtfläche bilden können.

Dementsprechend kann die abgeschrägte Außenwand eine äußere und/oder die abgeschrägte Innenwand eine innere Filterdichtfläche aufweisen, um mit der korrespondierenden Tankdichtfläche einen dichtenden Formschluss einzugehen.

Der zur o.a. Filterpatrone korrespondierende Wassertank für eine Haushaltsmaschine weist einen Tankboden auf, wobei am Tankboden eine ringförmige Tankdichtfläche zum dichten Anschluss der Filterpatrone vorgesehen ist, die eine Tankdurchgangsöffnung zum Durchfluss des Wassers aus der Filterpatrone durch die Wandung des Tankbodens zur Haushaltsmaschine umschließt. Zur vorteilhaften Wechselwirkung mit der oben beschriebenen Filterdichtfläche weist auch der Verlauf der Tankdichtfläche entlang ihrem Umfang einen variierenden Radius gegenüber einer zentralen Achse aufweist, so dass die Tankdichtfläche radiale Einbuchtungen und/oder radiale Ausbuchtungen umfasst.

Hierdurch ergeben sich die oben für die Filterpatrone aufgezeigten Möglichkeiten der Kodierung auf Seiten des Wassertanks. Durch diese Form der Tankdichtfläche ist eine Filterpatrone mit korrespondierender Filterdichtfläche wie oben beschrieben im Wassertank verwendbar. Für die Anpassung von Filterpatrone und tankseitigem Anschluss kann also durch diese Formgebung auch die Auswahl der Materialien und deren Anordnung maßgeblich und somit Bestandteil der Kodierung sein. Dabei können Ecken oder Kanten im Bereich der Dichtflächen vermieden werden, wodurch beispielsweise gegenüber Polygonformen aus dem Stand der Technik die Dichtfunktion verbessert wird. Auch eine Verbesserung der mechanischen Klemmung und damit der Fixierung ist durch den variierenden Radius beispielsweise gegenüber einer Kreisform möglich.

Mit den gegenseitigen Formanpassungen der Tankdichtfläche und der Filterdichtfläche werden auch die jeweiligen Vorteile sowohl auf Seiten des Tanks als auch der Filterpatrone erzielt. So weist eine Tankfilterfläche und auch die beschrieben Elastomerdichtung immer die gleiche Spezifikation der Form auf, wie die hierzu beschriebene Filter- oder Tankdichtfläche.

Ein Ausführungsbeispiel der Erfindung ist in der Zeichnung dargestellt und wird anhand der nachfolgenden Figuren näher erläutert.

### Im Einzelnen zeigen

Fig.1 eine perspektivische Darstellung eines Tankbodens mit eingesetzter Filterpatrone nach dem Stand der Technik,
Fig.2 eine perspektivische Explosivdarstellung eines Tankbodens mit Zentrierelement und Befestigungsring,
Fig.3 eine perspektivische Darstellung des Tankbodens gemäß Fig. 2 mit eingebautem Zentrierelement und eingebautem Befestigungsring,
Fig.4 eine Draufsicht auf den Tankboden gemäß den Figuren 2 und 3,
Fig.5 eine perspektivische Darstellung des Anschlussbereiches der Filterpatrone von der Seite betrachtet,
Fig.6 eine perspektivische Darstellung des Anschlussbereiches der Filterpatrone von schräg unten betrachtet,
Fig.7 eine perspektivische Darstellung einer auf Höhe des Filteranschlussstutzens aufgeschnittenen Filterpatrone, eingesetzt in einen Tankboden,
Fig.8 eine perspektivische Darstellung einer auf Höhe der Führungsnuten aufgeschnittenen Filterpatrone, eingesetzt in einen Tankboden,
Fig. 9 eine perspektivische Darstellung einer Filterpatrone, eingesetzt in einen Tankboden,
Fig. 10 eine perspektivische Darstellung des Zentrierelementes,
Fig. 11 eine Schnittdarstellung eines Tankbodens ohne Filterpatrone bei geöffnetem Wassertankventil,
Fig. 11a und b zwei Ausschnittvergrößerungen aus Fig. 11 zur Veranschaulichung einer verschließbaren Bypassleitung in der Tankdichtung,
Fig. 12 eine Schnittdarstellung eines Tankbodens gemäß Fig. 11 mit eingesetzter Filterpatrone,
Fig. 12a eine Ausschnittvergrößerung aus Fig. 12 zur Veranschaulichung der geschlossenen Bypassleitung,
Fig. 13 eine schematische Stirnansicht eines erfindungsgemäßen Filteranschlussstutzens,
Fig. 13a eine Ausschnittvergrößerung aus Fig. 13 und
Fig. 14 einen den Anschlussbereich zeigenden Ausschnitt der Filterpatrone zur Veranschaulichung einer Führungshilfe durch Abschrägungen des Anschlussstutzens.

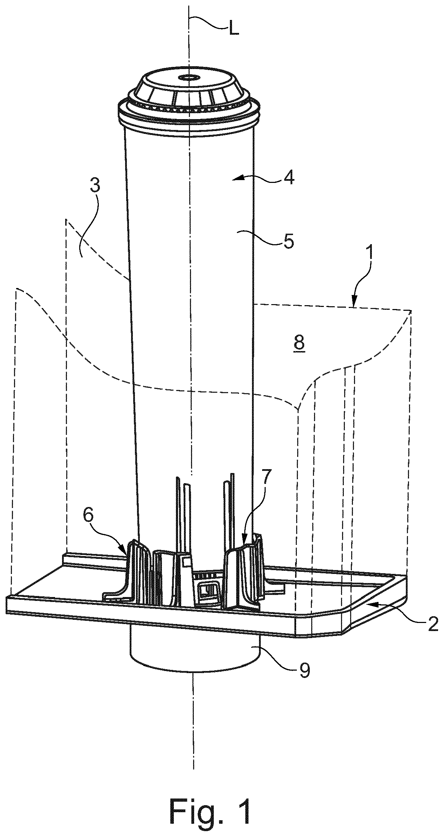

Fig. 1 veranschaulicht die übliche Ausgestaltung eines Wassertanks 1 einer Getränkemaschine, wie einer Kaffeemaschine, z.B. eines Kaffeevollautomaten nach dem Stand der Technik. Der Wassertank 1 umfasst einen Tankboden 2 und mit gestrichelten Linien teilweise dargestellten Wassertankseitenwänden 3. Eine Filterpatrone 4 mit einem Filtergehäuse 5 ist in den Wassertank 1 eingesetzt. Der Anschluss zwischen dem Tankboden 2 und der Filterpatrone 4 wird über Tankanschlusselemente 6 auf Seiten des Wassertanks und filterseitige Filteranschlusselemente 7 realisiert.

Die Filterpatrone 4 befindet sich im Innenraum 8 des Wassertanks 1, d. h. sie steht im Betrieb ganz oder teilweise in dem im Wassertank 1 bevorrateten Wasser. Ein Filteranschlussstutzen 9 des Wassertanks 1 für den Anschluss des Wassertanks 1 an die nicht dargestellte Getränkemaschine steht von der Unterseite des Wassertanks 1 ab.

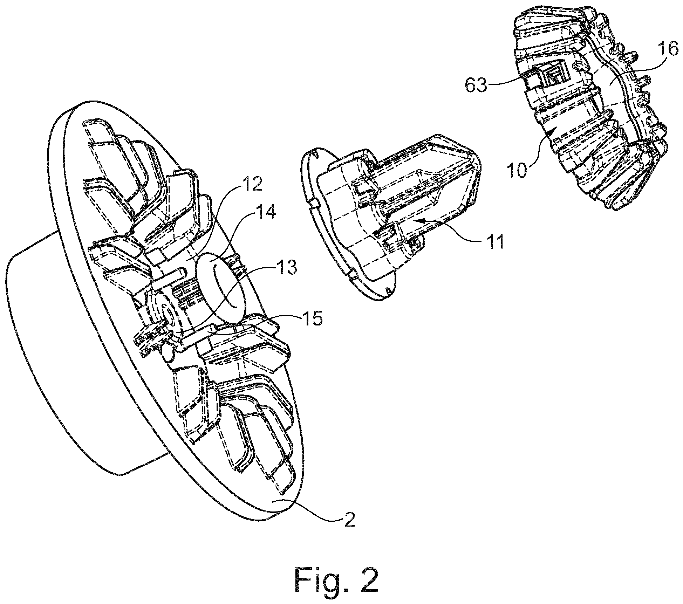

In Fig. 2 ist ein runder Ausschnitt des Tankbodens 2 dargestellt, wobei ein Befestigungsring 10 und ein Zentrierelement 11 zum Einlegen in eine Vertiefung 12 des Tankbodens 2 vorgesehen sind. Ein Tankventilkörper 13 mit einer als O-Ring ausgebildeten Dichtung 14, von dem zwei Pins 15 nach oben abstehen, ist ebenfalls in Fig. 2 zu sehen. Der Befestigungsring 10 trägt weiterhin eine Elastomerdichtung 16.

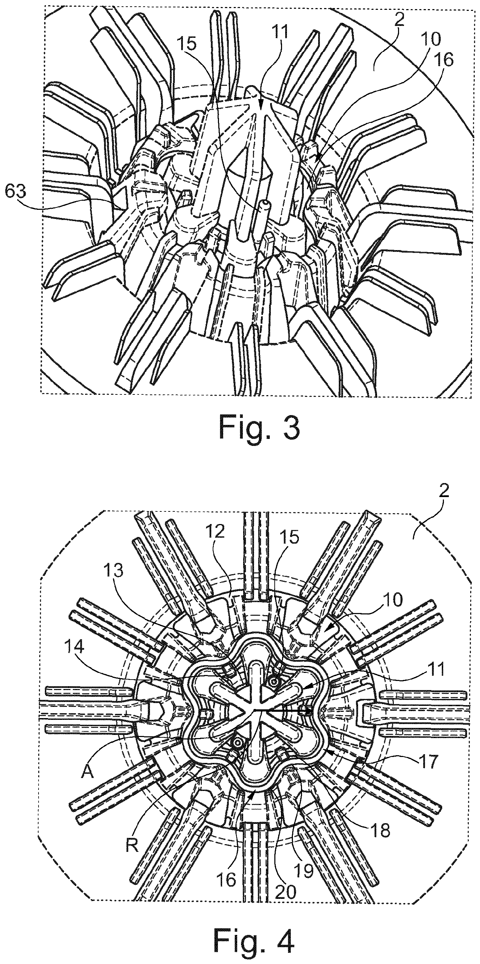

In der Fig. 3 und 4 sind der Befestigungsring 10 und das Zentrierelement 11 in den Tankboden 2 eingebaut. Hier ist erkennbar, dass die Pins 15 das Zentrierelement durchsetzen können und so Kodierelemente für die Kodierung des Wassertanks gegenüber dem zugehörigen Maschinenanschluss bilden, von dem beim Einsetzen des Wassertanks der Tankventilkörper 13 betätigt werden muss. Weiterhin ist in Fig.4 gut sichtbar, dass die die Wassertankdichtung 17 bildende Elastomerdichtung 16 eine Ringdichtung ist, die entlang ihrem Umfang gegenüber einer zentralen Achse A einen variierenden Radius R aufweist, so dass die eine Tankdichtfläche 18 bildende Innenfläche der Wassertankdichtung 17 radiale Einbuchtungen 19 und radiale Ausbuchtungen 20 umfasst. Die erste Tankdichtfläche 18 dient zugleich als erste Tankfixierfläche.

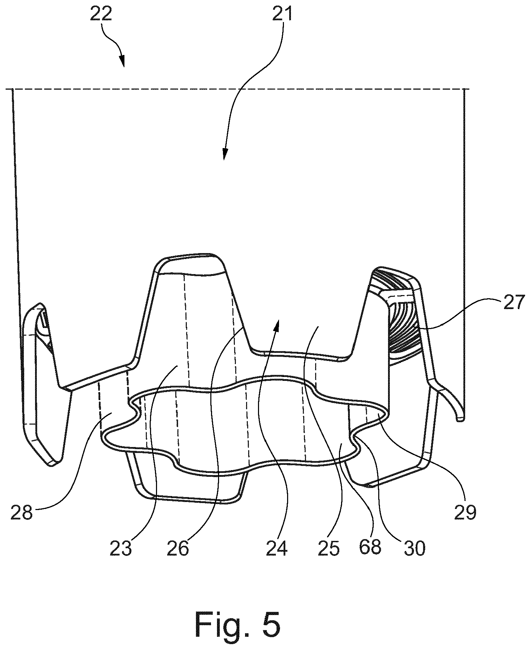

In Fig. 5 ist der Anschlussbereich 21 einer passenden Filterpatrone 22 gezeigt. Ein Filteranschlussstutzen 23 bildet einen inneren Ring der von einem äußeren Ring 24 mit axial verlaufenden Vorsprüngen 25 und Rücksprüngen 26 umgeben ist. Zwischen dem inneren Ring 23 und dem äußeren Ring 24 befindet sich ein ringförmiges Einlasssieb 27, durch das Wasser in die Filterpatrone gelangt. Die Außenfläche 28 und die Innenfläche 68 des Filteranschlussstutzens 23 sind passend zur Tankdichtfläche 18 ebenfalls mit Ausbuchtungen 29 und Einbuchtungen 30 versehen.

Die Außenfläche 28 und/oder die Innenfläche 68 des Filteranschlussstutzens 23 können zugleich als Filterfixierfläche dienen.

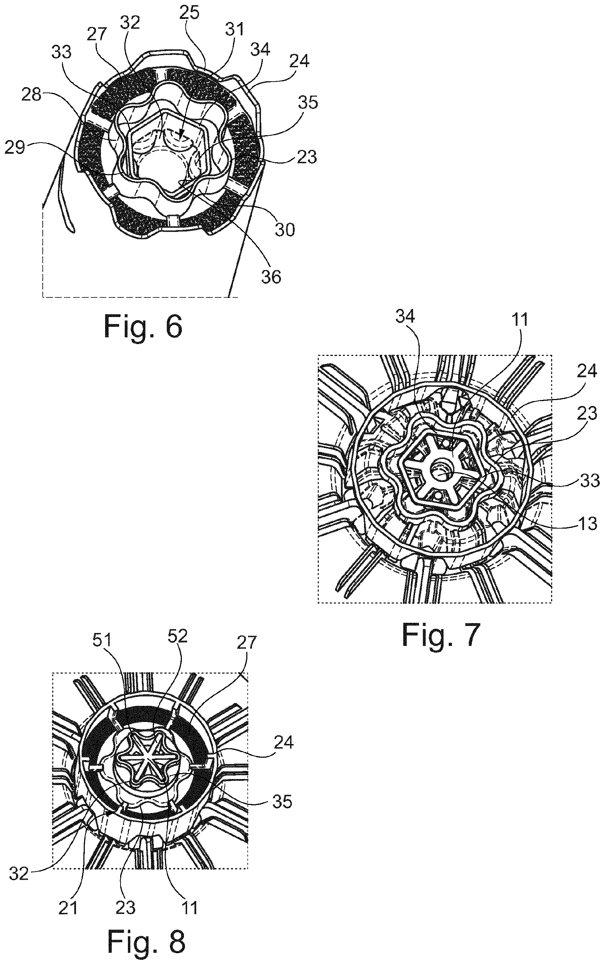

In der Ansicht von Fig. 6 ist neben den oben beschriebenen Teilen des Anschlussbereiches 21 der Filterpatrone 22 die besondere Ausgestaltung einer Führungsstruktur 31 der Filterpatrone 22 zur Aufnahme des Zentrierelementes 11 dargestellt. Die Führungsstruktur weist Führungsnuten 32 auf, die in Flucht zu den Kanten 33 eines Polygonringes 34, vorliegend beispielhaft mit sechs Führungsnuten in Flucht zu sechs Kanten eines sechskantförmigen Ringes liegen. In der Schnittdarstellung mit Blick von oben nach Fig. 7 geht die Schnittebene durch diesen Polygonring 34.

Nach oben in das Innere der Filterpatrone schließen sich Innenwölbungen 35 an die zwischen den Kanten 33 und den Führungsnuten 32 liegen. Die Innenwölbungen 35 bilden die seitlichen Wandungen 36 der Führungsnuten 32 aus. Durch diese gewölbte Form verjüngen sich die Wandungen 36 der Führungsnuten 32 sowohl in axialer Richtung nach oben hin (bezogen auf die Betriebsstellung) und in radiale Richtung von innen nach außen. In der Schnittstelle, mit Blick von oben gemäß Fig. 8 verläuft die Schnittebene auf einer Höhe, in der die Führungsnuten 32 deutlich ausgebildet sind. Zentral schließt sich innen eine Steigleitung 37 an, durch die das in die Filterpatrone 22 eintretenden Wasser nach oben zur Filterstrecke geleitet wird.

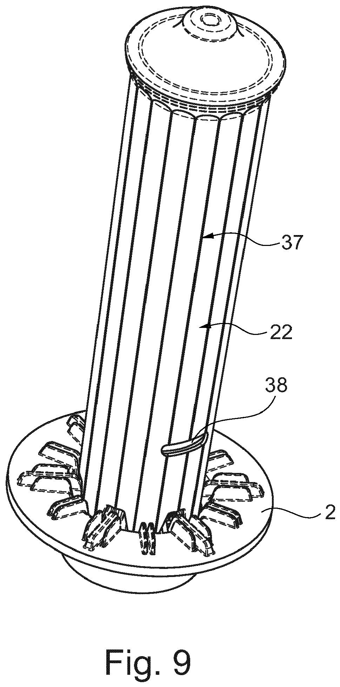

In Fig. 9 ist die gesamte Filterpatrone 22 dargestellt. In einem Filtergehäuse 37, das eine optionale seitliche Dosieröffnung 38 und den beschriebenen bodenseitigen Wasseranschluss aufweist. Die optionale Dosieröffnung 38 ist nur im Falle einer Ausführung der Filterpatrone vorgesehen, die für die Abgabe von Zusatzstoffen, z. B. Mineralien, Vitaminen oder dgl., aus einer im Filtergehäuse 37 untergebrachten Dosierkammer in den Wasservorrat ausgebildet ist. Da eine solche Dosierkammer innerhalb des Filtergehäuses 37 gegenüber der Filterstrecke geschlossen ist, hat diese keine weitere Bedeutung bezüglich der Filtration. Eine erfindungsgemäße Filterpatrone kann also ohne weiteres auch ohne diese Dosierkammer und deren Dosieröffnung 38 ausgebildet sein. In Fig. 9 ist insbesondere die Betriebsposition erkennbar, auf die sich die Angaben oben und unten in dieser Beschreibung beziehen.

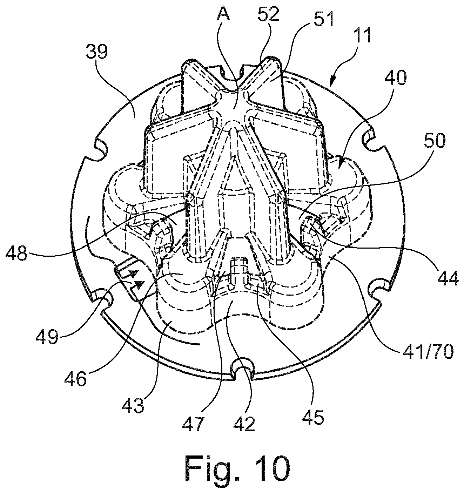

In Fig. 10 ist eine perspektivische Darstellung des Zentrierelementes 11 zu sehen. Das Zentrierelement ist mit einer Bodenplatte 39 versehen, die in montiertem Zustand in einer Aufnahme der Elastomerdichtung liegend diese randseitig hintergreift. Von der Bodenplatte 39 steht ein Zentrierdorn 40 nach oben ab, der eine ringförmige Außenfläche 41 aufweist, die auch eine zweite Tankfixierfläche bildet. Diese Außenfläche 41 weist einen entlang des Umfangs variierenden Radius gegenüber der zentralen Achse A auf, so dass auch diese Außenfläche 41 radiale Einbuchtungen 42 und Ausbuchtungen 43 umfasst. Die Außenfläche 41 ist so an eine entsprechende Form des Filteranschlussstutzens 9 angepasst.

Zur weiteren Anpassung sind auch die Einbuchtungen 42 und Ausbuchtungen 43 dieser Außenfläche 41 periodisch um eine Kreislinie oszillierend ausgebildet und weisen einen runden Verlauf auf. In der dargestellten Ausführung sind entsprechend der Gestaltung der dargestellten Ausführung der Filterpatrone 22 sechs Einbuchtungen 42 und sechs Ausbuchtungen 43 entlang einer Kreislinie mit einem Durchmesser kleiner 3 cm vorgesehen. Bei einer anderen Filterpatrone ist die Anpassung der Außenfläche 41 bzw. der zweiten Tankfixierfläche entsprechend passend abzuändern.

Alle Anpassungen der Außenfläche 41 des Zentrierdorns 11 führen dazu, dass in eingebautem Zustand nur ein ringförmiger Schlitz zwischen der Außenfläche 41 und der Elastomerdichtung 16 zum Einführen des Filteranschlussstutzens 23 offen ist. Dadurch ergibt sich eine weitere Kodierung gegen die Verwendung einer nicht geeigneten Filterpatrone. Zudem ist auf diese Weise eine Abstützung des Filteranschlussstutzens 23 auf dessen Innenseite an der Außenfläche 41 des Zentrierdorns 11 möglich. So kann um der Anpressdruck des Filteranschlussstutzens auf die Elastomerdichtung 16 über die variierende Form entlang der gesamten Umfangsform gleichmäßig erhöht werden.

Oberhalb der ringförmigen Außenfläche ist wenigstens ein nach oben abstehender Zahn 44 vorgesehen. Der eine oder die mehrere Zähne 44 sind auf einer Abstufung 45 des Zentrierdorns 40 angebracht. Weitere, der Form der Außenfläche 41 folgende Erhöhungen 46 gegen über der Abstufung 45 sind mit einem Abstand zu den Zähnen 44 angebracht, so dass zwischen den Zähnen und den Erhöhungen 46 eine Lücke 47 verbleibt. Der Zahn oder die Zähne 44 und/oder die Erhöhungen 46 können den Einsatz einer axialen Dichtung zur Umgehung der Kodierung verhindern. Oberhalb der Außenfläche 41 ist weiterhin eine Durchlassöffnung 48 vorgesehen, die in montiertem Zustand des Zentrierelementes 11 zu einer Tankdurchlassöffnung führt. Durch diese Durchlassöffnung 48 kann das filtrierte Wasser einer Filterpatrone 22 aus dem Wassertank abgeführt werden.

Eine oder mehrere Bodendurchlassöffnungen 49 sind unterhalb der Außenfläche 41 in der Bodenplatte 39 vorgesehen. Durch diese Bodenöffnungen kann ungefiltertes Wasser aus dem Wassertank geleitet werden. Unterhalb der Erhöhungen 46 und innerhalb der die Außenfläche 41 tragenden Wand ergibt sich ein Hohlraum 50 für die Aufnahme des Tankventilkörpers 13.

Oberhalb der ringförmigen Außenfläche 41 sind Führungsrippen 51 vorgesehen, die an ihrer Oberseite wie im dargestellten Ausführungsbeispiel abgeschrägt sein können. Die so gebildeten Führungsschrägen 52 helfen beim Einführen der Führungsrippen 51 in die Führungsnuten 32 einer Filterpatrone 22. In der Schnittdarstellung nach Fig. 4 sind die Führungsschrägen 52 der Führungsrippen 51 in der aufgesteckten Filterpatrone 22 gut zu erkennen.

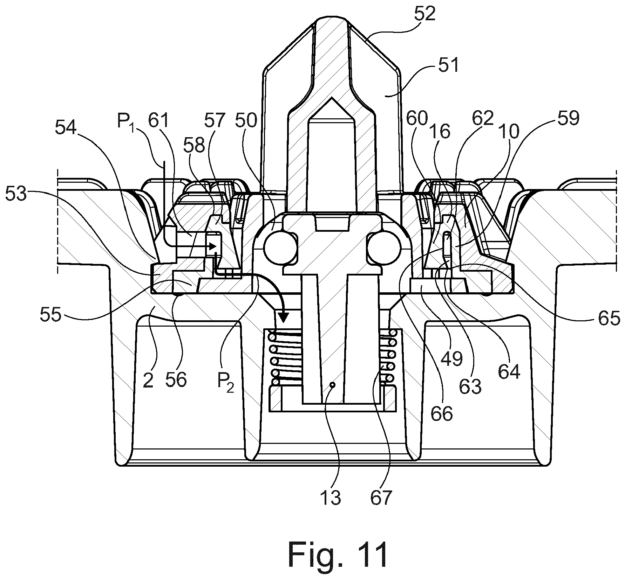

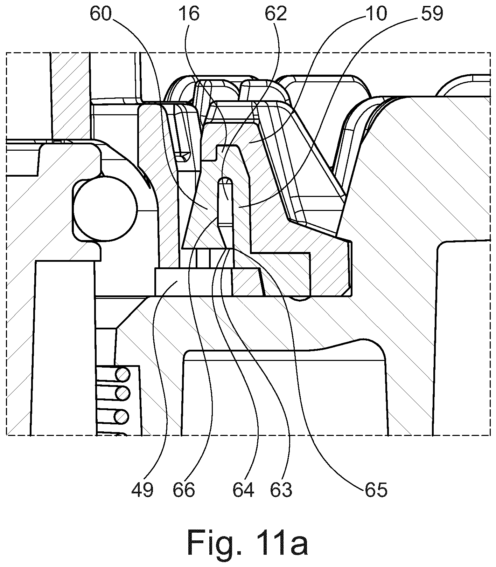

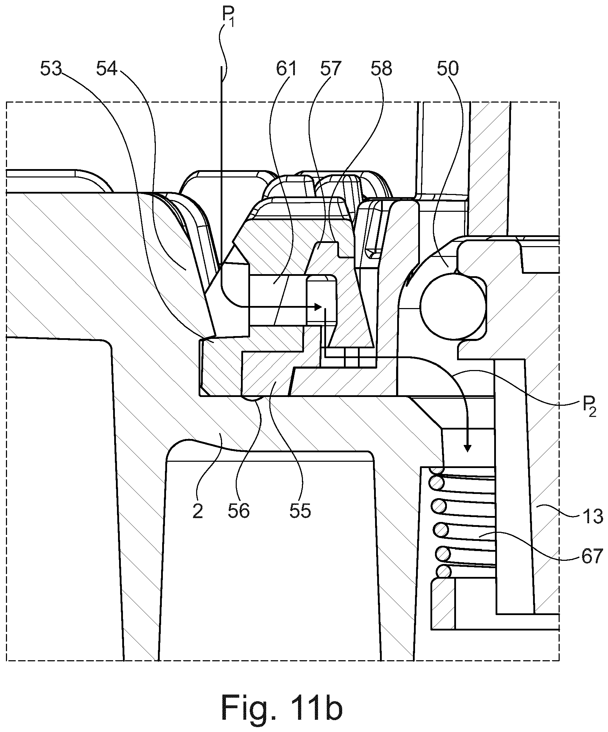

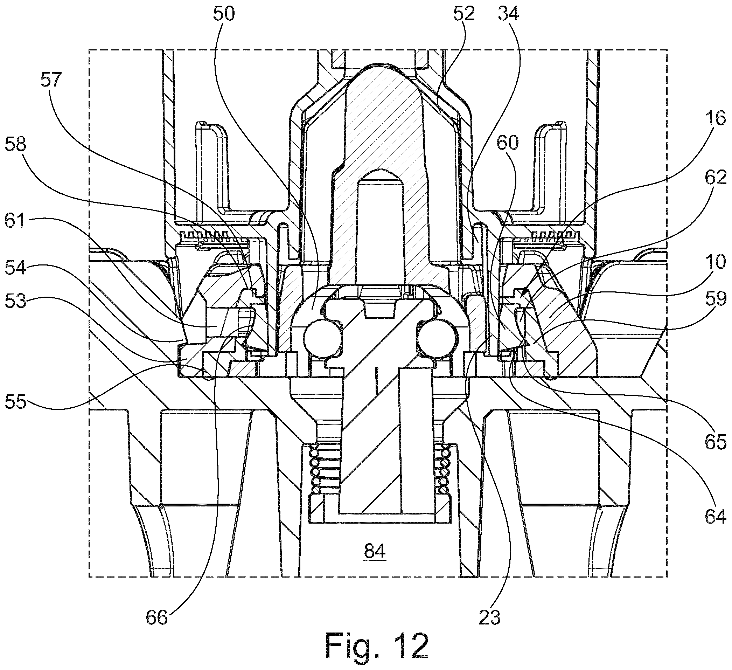

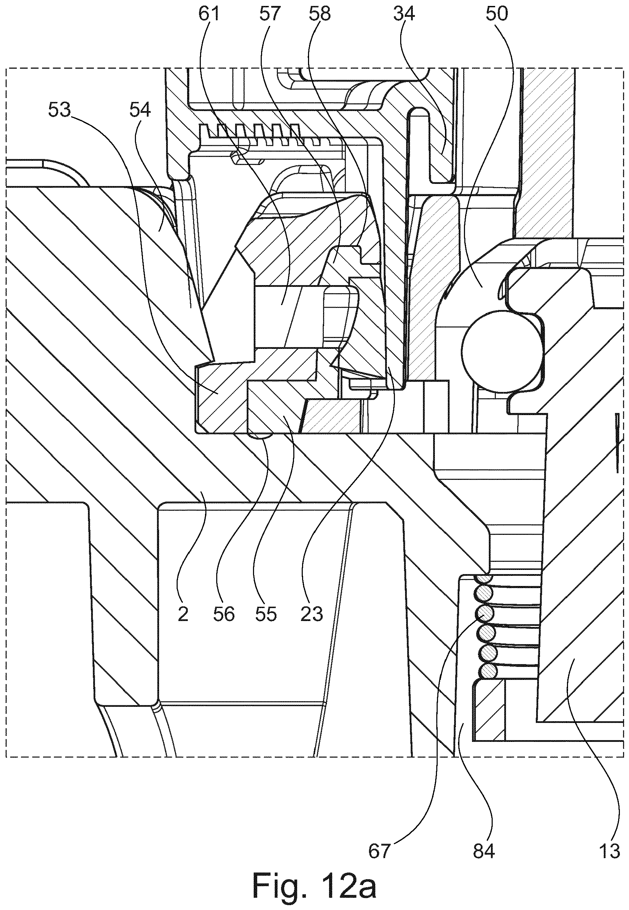

In den Fig. 11, 11a, 11b, 12 und 12a sind die zusammengebauten Bauteile des Wassertanks 1 für den Anschluss einer Filterpatrone ohne und mit Filterpatrone 22 dargestellt. Der Befestigungsring 10 ist mit einem Rastvorsprung 53 versehen, mit dem er am Tankboden 2 verrasten kann, indem er eine Bodenrippe 54 des Wassertanks hintergreift. Die Elastomerdichtung 16 hat einen Bodenabschnitt 55, der den Befestigungsring 10 untergreift und so die Elastomerdichtung 16 mit dem Befestigungsring 10 am Tankboden 2 hält.

Für die Abdichtung gegenüber dem Tankboden 2 weist die Elastomerdichtung 16 eine Dichtfläche auf, die vorliegend durch einen Dichtwulst 56 realisiert ist. Für den dichten Abschluss der Elastomerdichtung 16 gegenüber dem Befestigungsring 10 kann eine umlaufende Dichtfläche an verschiedenen Stellen vorgesehen werden. Im dargestellten Ausführungsbeispiel ist eine oben an der Elastomerdichtung 16 angeformte Ringdichtung 57 vorgesehen, die in einer Dichtnut 58 des Befestigungsrings mit diesem dichtet.

Die Elastomerdichtung 16 umfasst einen Außenring 59 und einen Innenring 60, die einstückig miteinander ausgeformt und verbunden sind. Der Außenring 59 und der Innenring 60 folgen beide in ihrer Form entlang dem Umfang dem variierenden Radius des Befestigungsrings 10, des Filteranschlussstutzens 23 und der Elastomerdichtung 16 und den dadurch gebildeten Einbuchtungen und Ausbuchtungen. Der Außenring 59 ist abgestuft und trägt die Ringdichtung 57 sowie den Dichtwulst 56. Der Außenring 59 ist weiterhin mit einer oder mehreren Bypassöffnungen 61 versehen, durch die ungefiltertes Wasser in Fließrichtung P1 in den Ringspalt 62 zwischen dem Außenring 59 und dem Innenring 60 gelangen kann. Die Bypassöffnung 61 der Elastomerdichtung 16 liegt in montiertem Zustand unmittelbar im Anschluss an eine Bypassöffnung 63 im Befestigungsring 11, die z.B. auch in den Fig. 1 und 3 zu sehen ist. Durch die Bypassöffnung 63 kann in Richtung P2 ungefiltertes Wasser aus dem Ringspalt 62 aus dem Wassertank 1 in die entsprechende Getränkemaschine fließen.

Der Innenring 60 weist an seiner Unterseite eine Dichtlippe 64 auf, der am Außenring 59 eine Dichtfläche 65 gegenüberliegt. Im entspannten Zustand der Elastomerdichtung 16 ist der Ringspalt 62 zwischen dem Außenring 59 und dem Innenring 60 unten offen, wie in Fig. 11 zu sehen ist, so dass das im Bypass geführte ungefilterte Wasser aus dem Ringspalt 62 in Fließrichtung P2 abfließen kann. In diesem Zustand ist die Innenseite 66 des Innenrings 60, die die Wassertankdichtung 17 bildet, im Verlauf nach unten nach innen abgeschrägt. Die Ausgestaltung des Bypasses ist in den Vergrößerungen gemäß den Fig. 11a und b hervorgehoben.

Beim Einsetzen einer Filterpatrone 22 mit dem Filteranschlussstutzen 23 wird die Elastomerdichtung 16 verformt, so dass die Innenseite 66 nach außen gedrückt wird und im Wesentlichen senkrecht entlang dem Filteranschlussstutzen verläuft. Dabei wird die Dichtlippe 64 auf die gegenüberliegende Dichtfläche 65 gedrückt und somit der Ringspalt 62 und damit auch der Bypass durch die Bypassöffnungen 61, 63 geschlossen. Durch die Verformung wird ein Anpressdruck erzeugt, der die Tankdichtfläche 17 an die Filterdichtfläche 28 und zugleich die Dichtlippe 64 auf die Dichtfläche 65 drückt. Dieser Zustand ist in Fig. 12 und Fig. 12a gezeigt.

Der Tankventilkörper 13 ist sowohl in Fig. 11 als auch in Fig. 12 durch einen nicht näher gezeigten Anschlag der zugehörigen Maschine gegen eine Rückstellfeder 67 in den Hohlraum 50 angehoben und so in der geöffneten Stellung, die dem eingesetzten Wassertank entspricht. Wird der Wassertank aus der Maschine entfernt, schließt der Tankventilkörper 13 unter dem Druck der Rückstellfeder 67.

Die Tankdichtfläche 18 wird durch die Innenseite 66 der Elastomerdichtung 16 gebildet und stellt zugleich eine erste Tankfixierfläche 18 dar. An dieser Seite liegt wie bereist o.a. eine durch die Filterdichtfläche 28 gebildete erste Filterfixierfläche 28 im eingesteckten Zustand der Filterpatrone 5,22 unter einem Anpressdruck an, der die Elastomerdichtung 16 so verformt, dass ein fixierender und dichtender Formschluss zustande kommt.

An der die zweite Tankfixierfläche bildenden Außenfläche 41 liegt dabei eine zweite Filterfixierfläche 68 (s. Fig. 5) an, die durch die Innenfläche des Filteranschlussstutzens 23 gebildet wird. Dieser Formschluss wird ebenfalls unter einem Anpressdruck ausgebildet. Durch die erfindungsgemäße Formgebung des Filteranschlussstutzens 23 bildet dieser eine ringförmige Wand 69 aus, die bei Bedarf federnd geweitet werden kann.

Dadurch ergibt sich die Möglichkeit eines Toleranzausgleiches bei einer guten Fixierung, die durch die entsprechende Verspannung bewirkt wird. Durch die beiderseitige parallele oder zueinander geneigte Formgebung der ersten Filterfixierfläche 28 und einer zweiten Filterfixierfläche 68 bildet die dazwischen liegende ringförmige, gewellte Wand 69 des Anschlussstutzens 23 eine gewellte Ringfeder 70. Die zweite Filterfixierfläche 68 kann dabei auch als zweite Filterdichtfläche wirken.

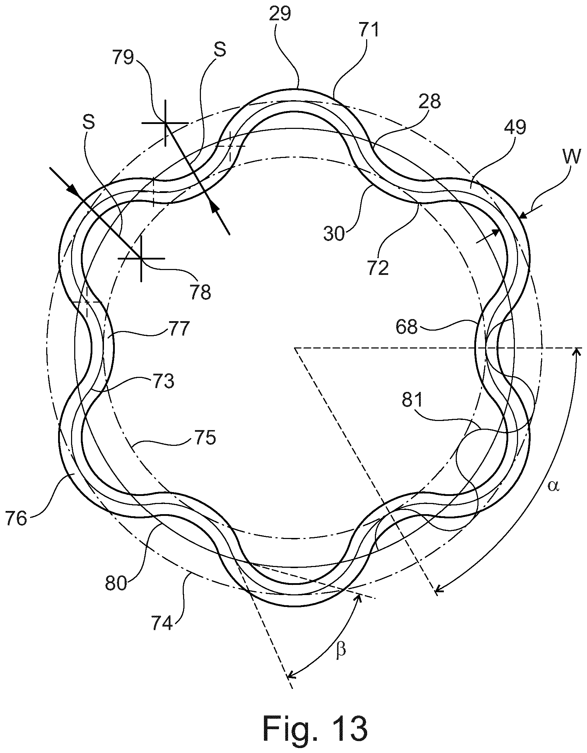

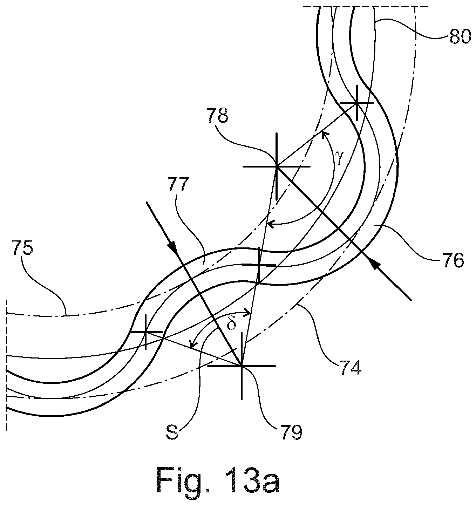

Der Filteranschlussstutzen gemäß der Stirnansicht Fig. 13 sowie der Ausschnittvergrößerung gemäß Fig. 13a zeigt die beschriebene Wellenform mit Ausbuchtungen 29 und Einbuchtungen 30. Die ringförmige Wand 69 des Filteranschlussstutzens 23 mit einer Wandstärke W weist an der Wandaußenseite 71 die erste Filterfixierfläche 28 und auf der Wandinnenseite 72 die zweite Filterfixierfläche 68 auf. Die Wandaußenseite 71 und die Wandinnenseite 72 verlaufen in der dargestellten Ansicht parallel, sind jedoch in axialer Richtung zueinander hin abgeschrägt, was weiter unten noch erläutert wird. Die Wellenform wird daher anhand einer gestrichelt dargestellten Mittellinie 73 weiter veranschaulicht.

Die Mittellinie 73 verläuft wellenförmig zwischen einem äußeren Hüllkreis 74 dessen Radius den größten Wert des variierenden Radius aufweist, und einem inneren Hüllkreis 75, dessen Radius den kleinsten Radius des variierenden Radius der Wellenform aufweist. Die Ausbuchtungen 29 und Einbuchtungen 30 der Mittelinie 73 bilden Wellenberge in der Form konvexer Kreissegmente 76 und Wellentäler in der Form konkaver Kreissegmente 77. In der dargestellten Ausführung zeigen alle Kreissegmente 76, 77 den gleichen Segmentradius S. Die Mittelpunkte 78, 79 der Kreissegmente 76, 77 liegen für die konvexen Kreissegmente 76 innerhalb des inneren Hüllkreises 75 und für die konkaven Kreissegmente 77 außerhalb des äußeren Hüllkreises 74. Die konvexen Kreissegmente 76 und die konkaven Kreissegmente 77 gehen tangential ineinander über und sind gleichmäßig über den Umfang verteilt, so dass sich eine drehsymmetrische Form ergibt. Im dargestellten Ausführungsbeispiel sind jeweils sechs konvexe Kreissegmente 76 und sechs konkave Kreissegmente 77 vorgesehen, die alternierend in einem Winkelabstand von 30° liegen, d.h. die konvexen Kreissegmente 76 liegen zueinander um einen Winkel α von 60° auseinander und die konkaven Kreissegmente 77 ebenso.

Durch die Wahl des Segmentradius und die damit einhergehende Position der zugehörigen Mittelpunkte 78, 79 verläuft die Mittelinie vergleichsweise flach gewölbt, wellenförmig um die Mittelkreislinie 80 herum. Die Mittellinie 73 schneidet die Mittelkreislinie 80 unter einem stumpfen Winkel β. Hierdurch ist die Bogenlänge der Ausbuchtungen 29 deutlich länger als die Bogenlänge der Einbuchtungen 30, wodurch der von dem Segmentbogen der Ausbuchtungen 29 überstrichene Winkel γ deutlich größer ist als der von den Einbuchtungen 30 überstrichene Winkel 5. Diese Form verbessert die Federwirkung des Filteranschlussstutzens 23.

Zum Vergleich sind in der Zeichnung noch Kreissegmente 81 dargestellt, deren Segmentmittelpunkte 82 direkt auf der Mittellinie 73 liegen. Dieser in dieser Ausführungsform nicht realisierte Verlauf weist deutlich kleinere Segmentradien und einen im Wesentlichen senkrechten Verlauf zur Mittellinie 73 auf.

Eine gute Federwirkung hat sich bei Radien und Wandstärken gezeigt, bei denen der Radius des inneren Hüllkreises 75 zwischen 5% und 15% des Radius des äußeren Hüllkreises 74 und der Radius der konvexen und/oder konkaven Kreissegmente zwischen 20% und 35% des Radius des äußeren Hüllkreises 74 liegt. Die Wandstärke W zwischen der Wandaußenseite 71 und der hierzu (bezogen auf die Betriebsposition) parallel oder geneigt verlaufenden Wandinnenseite 72 liegt bevorzugt zwischen 5% und 15% des Radius des äußeren Hüllkreises 74.

Im dargestellten Beispiel weist der äußere Hüllkreis 74 einen Radius von ca. 11 mm und der innere Hüllkreis 75 einen Radius von ca. 9,75 mm auf. Dabei beträgt der Segmentradius der konvexen und konkaven Kreissegmente ca. 3,08 mm und die Wandstärke zwischen der Wandaußenseite 71 und der hierzu parallel oder geneigt verlaufenden Wandinnenseite 72 ca. 0,9 mm.

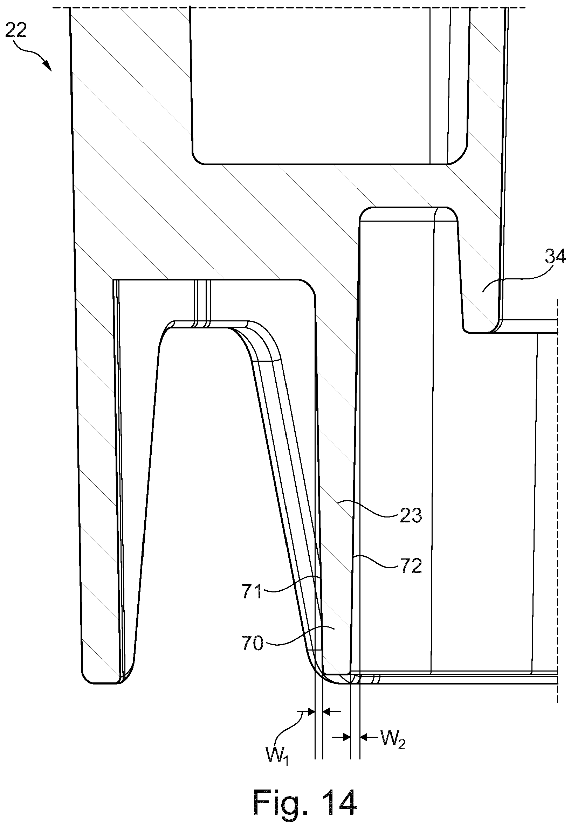

In Fig. 14 ist zu erkennen, dass die Außen 71 - und/oder die Innenwand 72 des Filteranschlussstutzens 23, die je nach Ausführungsform auch eine oder zwei Filterdichtflächen 28 bilden, gegenüber der Vertikalen um die Winkel ω1 oder w2 abgeschrägt sind, so dass sie bezogen auf die Betriebsposition der Filterpatrone 4, 22 von oben nach unten zusammenlaufen. Diese Abschrägung oder Abschrägungen um den oder die Winkel ω1 und/oder w2 bilden eine Einführhilfe beim Einführen des Anschlussstutzens 23 in den Ringspalt zwischen der Elastomerdichtung 16 und der Außenfläche 41 des Wassertanks 1.

### Bezugszeichenliste:

1 Wassertank
2 Tankboden
3 Wassertankseitenwand
4 Filterpatrone
5 Filtergehäuse
6 Tankanschlusselement
7 Filteranschluss
8 Innenraum
9 Filteranschlussstutzen
10 Befestigungsring
11 Zentrierelement
12 Vertiefung
13 Tankventilkörper
14 Dichtung
15 Pin
16 Elastomerdichtung
17 Wassertankdichtung/Ringdichtung
18 Tankdichtfläche
19 Einbuchtung
20 Ausbuchtung
21 Anschlussbereich
22 Filterpatrone
23 Filteranschlussstutzen/innerer Ring
24 Äußerer Ring
25 Vorsprung
26 Rücksprung
27 Einlasssieb
28 Filterdichtfläche/Außenfläche
29 Ausbuchtung
30 Einbuchtung
31 Führungsstruktur
32 Führungsnut
33 Kante
34 Polygonring
35 Innenwölbung
36 Wandung
37 Filtergehäuse
38 Dosieröffnung
39 Bodenplatte
40 Zentrierdorn
41 Außenfläche
42 Einbuchtung
43 Ausbuchtung
44 Zahn
45 Abstufung
46 Erhöhung
47 Lücke
48 Durchlassöffnung
49 Bodendurchlassöffnung
50 Hohlraum
51 Führungsrippe
52 Führungsschräge
53 Rastvorsprung
54 Bodenrippe
55 Bodenabschnitt
56 Dichtwulst
57 Ringdichtung
58 Dichtnut
59 Innenring
60 Außenring
61 Bypassöffnung
62 Ringspalt
63 Bypassöffnung
64 Dichtlippe
65 Dichtfläche
66 Innenseite
67 Rückstellfeder
68 Zweite Filterfixierfläche/Innenfläche
69 Wand
70 Ringfeder
71 Wandaußenseite
72 Wandinnenseite
73 Mittellinie
74 Äußerer Hüllkreis
75 Innerer Hüllkreis
76Konvexes Kreissegment
77 Konkaves Kreissegment
78 Mittelpunkt
79 Mittelpunkt
80 Mittelkreislinie
81 Kreissegment
82 Segmentmittelpunkt
83 Wendepunkt
84 Tankdurchgangsöffnung

A Achse
W Wandstärke
S Segmentradius
P1 Fließrichtung
P2 Fließrichtung

## Patentansprüche

1. Wassertank (1) für eine Haushaltsmaschine mit einem Tankboden (2), wobei am Tankboden (2) zum dichten Anschluss einer Filterpatrone (4) eine ringförmige Tankdichtfläche (18) vorgesehen sind, die eine Tankdurchgangsöffnung (84) zum Durchfluss des Wassers durch die Wandung des Tankbodens (2) zur Haushaltsmaschine umschließt,
**dadurch gekennzeichnet, dass**
ein die Tankdichtfläche (18) umgehender Wasserdurchlass (61, 62, 63) von außerhalb der Tankdichtfläche (18) nach innen zur Tankdurchgangsöffnung (84) vorgesehen ist, der durch ein filterseitiges Betätigungselement (23) beim Einsetzen der Filterpatrone verschließbar ist, dass die Tankdichtfläche (18) und/oder die Filterdichtfläche (28) der Filterpatrone (4, 22) bezogen auf eine zentrale Achse (A) einen variierenden Radius aufweisen, so dass die Tankdichtfläche (18) und/oder die Filterdichtfläche radiale Einbuchtungen (19, 30) und/oder radiale Ausbuchtungen (20, 29) umfassen, wobei die Ausbuchtungen (20, 29) und/oder Einbuchtungen (19, 30) einen runden Verlauf aufweisen, dass eine ringförmige Elastomerdichtung (16) vorgesehen ist, in der die radialen Ausbuchtungen (19) und/oder radialen Einbuchtungen (20) vorgeformt angebracht sind und dass der die Tankdichtfläche (18) umgehende Wasserdurchlass (61, 62, 63)) von außerhalb der Tankdichtfläche (18) nach innen zur Tankdurchgangsöffnung (84) als ein Bypasskanal für ungefiltertes Wasser aus dem Wassertank (1) im Tankboden vorgesehen ist, der aus dem Wassertankinnenraum (8) durch die Elastomerdichtung (16) verläuft.

2. Wassertank (1) nach Anspruch 1, **dadurch gekennzeichnet, dass** die Tankdichtfläche (18) eine zur zentralen Achse der Tankdurchgangsöffnung (84) hinweisende Innenfläche eines ringförmigen Tankanschlusselementes bildet.

3. Wassertank (1) nach einem der vorgenannten Ansprüche **dadurch gekennzeichnet, dass** die Einbuchtungen (19, 30) und/oder Ausbuchtungen (20, 29) der Tankdichtfläche (18) und/oder der Filterdichtfläche (28) periodisch um eine Kreislinie (80) oszillierend ausgebildet sind.

4. Wassertank (1) nach einem der vorgenannten Ansprüche **dadurch gekennzeichnet, dass** an der Innenseite der radialen Ausbuchtungen (19) und/oder radialen Einbuchtungen (20) der Elastomerdichtung (16) die Tankdichtfläche (18) angeordnet ist.

5. Wassertank (1) nach einem der vorgenannten Ansprüche **dadurch gekennzeichnet, dass** die Tankdichtfläche (18) einen von oben nach unten zur zentralen Achse (A) hinführenden schrägen Verlauf aufweist.

6. Wassertank (1) nach einem der vorgenannten Ansprüche **dadurch gekennzeichnet, dass** der Bypasskanal (61, 62, 63) einen Ringspalt (62) in der Elastomerdichtung (16) umfasst.

7. Wassertank (1) nach einem der vorgenannten Ansprüche **dadurch gekennzeichnet, dass** die Elastomerdichtung (16) ein Verschlusselement (64) umfasst, mittels dem der Bypasskanal (61, 62, 63) verschließbar ist.

8. Wassertank (1) nach einem der vorgenannten Ansprüche **dadurch gekennzeichnet, dass** das Verschlusselement zwei gegenüberliegende ringförmige Dichtflächen (64,65) im Ringspalt (62) umfasst, durch die der Ringspalt (62) durch Verformung der Elastomerdichtung (16) verschließbar ist.

9. Wassertank (1) nach Anspruch 1 **dadurch gekennzeichnet, dass** der die Filterdichtfläche (28) aufweisende, ringförmige Filteranschlussstutzen (23) des Filteranschlusselementes wenigstens im Bereich der Filterdichtfläche (28) aus einem bei Betriebstemperatur formfesten Kunststoff besteht, der insbesondere fester als ein Elastomer ist.

10. Wassertank (1) nach einem der vorgenannten Ansprüche **dadurch gekennzeichnet, dass** die Filterdichtfläche (28) eine von der zentralen Achse (A) der Filterauslassöffnung wegweisenden Außenfläche des ringförmigen Filteranschlussstutzens (23) des Filteranschlusselementes bildet.

11. Wassertank (1) nach einem der vorgenannten Ansprüche, **dadurch gekennzeichnet, dass** der ringförmige Filteranschlussstutzen (23) des Filteranschlusselementes eine Außen (71) - und/oder eine Innenwand (72) aufweist, die, bezogen auf die Betriebsposition der Filterpatrone, gegenüber der Vertikalen um einen Winkel ω1 und/oder ω2 abgeschrägt sind, so dass die Außenwand (71) und die Innenwand (72) von oben nach unten zusammenlaufen.

12. Filterpatrone (4), die mit einem Patronengehäuse (5) versehen ist, das eine Gehäuseinnenseite von einer Gehäuseaußenseite trennt, wobei eine im Betrieb der Filterpatrone (4) gegenüber der äußeren Umgebung des Patronengehäuses(5) offene Filtereinlassöffnung (40) vorgesehen ist, wobei, bezogen auf die Strömungsrichtung des Wassers im Betrieb, im Anschluss an die Filtereinlassöffnung eine Vorrichtung zur Wasserleitung im Inneren des Patronengehäuses (5) vorgesehen ist, die wenigstens eine, wenigstens ein Filtermedium aufweisende Filterkammer umfasst und in einer Filterauslassöffnung zum Absaugen von Wasser aus der Filterpatrone (4) endet, und wobei ein ringförmiger Filteranschlussstutzen (23) für den Anschluss der Filterpatrone im Wassertank (1) vorgesehen ist, **dadurch gekennzeichnet, dass** der Filteranschlussstutzen (23) an einen Wassertank gemäß einem der Ansprüche 1 bis 11 ausgebildet ist.

## Claims

1. Water tank (1) for a domestic appliance, having a tank base (2), wherein there is provided on the tank base (2), for the sealed connection of a filter cartridge (4), an annular tank sealing surface (18) which surrounds a tank passage opening (84) for the flow of water through the wall of the tank base (2) to the domestic appliance, **characterized in that** a water passage (61, 62, 63) which bypasses the tank sealing surface (18) is provided from outside the tank sealing surface (18) inward to the tank passage opening (84), which water passage (61, 62, 63) can be closed by a filter-side actuation element (23) upon insertion of the filter cartridge, **in that** the tank sealing surface (18) and/or the filter sealing surface (28) of the filter cartridge (4, 22) have a varying radius in relation to a central axis (A), such that the tank sealing surface (18) and/or the filter sealing surface comprise radial indentations (19, 30) and/or radial protuberances (20, 29), wherein the protuberances (20, 29) and/or indentations (19, 30) have a round profile, **in that** an annular elastomer seal (16) is provided, in which the radial protuberances (19) and/or radial indentations (20) are preformed, and **in that** the water passage (61, 62, 63) bypassing the tank sealing surface (18), from outside the tank sealing surface (18) inward to the tank passage opening (84), as a bypass channel for unfiltered water from the water tank (1) is provided in the tank base and runs from the water tank interior (8) through the elastomer seal (16).

2. Water tank (1) according to Claim 1, **characterized in that** the tank sealing surface (18) forms an inner surface of an annular tank connection element, said inner surface pointing toward the central axis of the tank passage opening (84).

3. Water tank (1) according to one of the preceding claims, **characterized in that** the indentations (19, 30) and/or protuberances (20, 29) of the tank sealing surface (18) and/or of the filter sealing surface (28) are designed oscillating periodically around a circular line (80) .

4. Water tank (1) according to one of the preceding claims, **characterized in that** the tank sealing surface (18) is arranged on the inside of the radial protuberances (19) and/or radial indentations (20) of the elastomer seal (16).

5. Water tank (1) according to one of the preceding claims, **characterized in that** the tank sealing surface (18) has an oblique profile leading from the top down toward the central axis (A).

6. Water tank (1) according to one of the preceding claims, **characterized in that** the bypass channel (61, 62, 63) comprises an annular gap (62) in the elastomer seal (16) .

7. Water tank (1) according to one of the preceding claims, **characterized in that** the elastomer seal (16) comprises a closure element (64), by means of which the bypass channel (61, 62, 63) can be closed.

8. Water tank (1) according to one of the preceding claims, **characterized in that** the closure element comprises two opposite annular sealing surfaces (64, 65) in the annular gap (62), through which the annular gap (62) can be closed by deformation of the elastomer seal (16) .

9. Water tank (1) according to Claim 1, **characterized in that** the annular filter connection piece (23) of the filter connection element, which has the filter sealing surface (28), consists, at least in the region of the filter sealing surface (28), of a plastic which is dimensionally stable at the operating temperature and which is in particular stronger than an elastomer.

10. Water tank (1) according to one of the preceding claims, **characterized in that** the filter sealing surface (28) forms an outer surface of the annular filter connection piece (23) of the filter connection element, said outer surface pointing away from the central axis (A) of the filter outlet opening.

11. Water tank (1) according to one of the preceding claims, **characterized in that** the annular filter connection piece (23) of the filter connection element has an outer wall (71) and/or an inner wall (72) which, in relation to the operating position of the filter cartridge, slant by an angle ω1 and/or ω2 relative to the vertical, such that the outer wall (71) and the inner wall (72) converge from the top downward.

12. Filter cartridge (4), which is provided with a cartridge housing (5) that separates a housing interior from a housing exterior, wherein a filter inlet opening (40) is provided which is open to the outer environment of the cartridge housing (5) during the operation of the filter cartridge (4), wherein, with respect to the flow direction of the water during operation, the filter inlet opening is followed downstream by a device for channeling water inside the cartridge housing (5), which device comprises at least one filter chamber having at least one filter medium and ends in a filter outlet opening for sucking water out of the filter cartridge (4), and wherein an annular filter connection piece (23) is provided for connecting the filter cartridge in the water tank (1), **characterized in that** the filter connection piece (23) is designed on a water tank according to one of Claims 1 to 11.

## Revendications

1. Réservoir d'eau (1) pour un appareil ménager avec un fond de réservoir (2), une surface d'étanchéité de réservoir annulaire (18) étant prévue sur le fond de réservoir (2) pour le raccordement étanche d'une cartouche filtrante (4), laquelle entoure une ouverture de passage de réservoir (84) pour le passage de l'eau à travers la paroi du fond de réservoir (2) vers l'appareil ménager,
**caractérisé en ce**
**qu'**un passage d'eau (61, 62, 63) contournant la surface d'étanchéité de réservoir (18) est prévu de l'extérieur de la surface d'étanchéité de réservoir (18) vers l'intérieur vers l'ouverture de passage de réservoir (84), lequel peut être fermé par un élément d'actionnement (23) côté filtre lors de l'insertion de la cartouche filtrante, en ce que la surface d'étanchéité de réservoir (18) et/ou la surface d'étanchéité de filtre (28) de la cartouche filtrante (4, 22) présentent un rayon variable par rapport à un axe central (A), de telle sorte que la surface d'étanchéité de réservoir (18) et/ou la surface d'étanchéité de filtre comprennent des renfoncements radiaux (19, 30) et/ou des renflements radiaux (20, 29), les renflements (20, 29) et/ou les renfoncements (19, 30) présentant un tracé arrondi, en ce qu'un joint d'étanchéité élastomère annulaire (16) est prévu, dans lequel les renflements radiaux (19) et/ou les renfoncements radiaux (20) sont mis en place en étant préformés, et en ce que le passage d'eau (61, 62, 63) contournant la surface d'étanchéité de réservoir (18) est prévu de l'extérieur de la surface d'étanchéité de réservoir (18) vers l'intérieur vers l'ouverture de passage de réservoir (84) sous la forme d'un canal de dérivation pour l'eau non filtrée du réservoir d'eau (1) dans le fond de réservoir, qui s'étend à partir de l'espace intérieur de réservoir d'eau (8) à travers le joint d'étanchéité élastomère (16).

2. Réservoir d'eau (1) selon la revendication 1, **caractérisé en ce que** la surface d'étanchéité de réservoir (18) forme une surface intérieure d'un élément de raccordement de réservoir annulaire, orientée vers l'axe central de l'ouverture de passage de réservoir (84) .

3. Réservoir d'eau (1) selon l'une quelconque des revendications précédentes, **caractérisé en ce que** les renfoncements (19, 30) et/ou les renflements (20, 29) de la surface d'étanchéité de réservoir (18) et/ou de la surface d'étanchéité de filtre (28) sont réalisés de manière à osciller périodiquement autour d'une ligne circulaire (80).

4. Réservoir d'eau (1) selon l'une quelconque des revendications précédentes, **caractérisé en ce que** la surface d'étanchéité de réservoir (18) est agencée sur le côté intérieur des renflements radiaux (19) et/ou des renfoncements radiaux (20) du joint d'étanchéité élastomère (16).

5. Réservoir d'eau (1) selon l'une quelconque des revendications précédentes, **caractérisé en ce que** la surface d'étanchéité de réservoir (18) présente un tracé incliné de haut en bas vers l'axe central (A).

6. Réservoir d'eau (1) selon l'une quelconque des revendications précédentes, **caractérisé en ce que** le canal de dérivation (61, 62, 63) comprend un espace annulaire (62) dans le joint d'étanchéité élastomère (16) .

7. Réservoir d'eau (1) selon l'une quelconque des revendications précédentes, **caractérisé en ce que** le joint d'étanchéité élastomère (16) comprend un élément de fermeture (64) au moyen duquel le canal de dérivation (61, 62, 63) peut être fermé.

8. Réservoir d'eau (1) selon l'une quelconque des revendications précédentes, **caractérisé en ce que** l'élément de fermeture comprend deux surfaces d'étanchéité annulaires opposées (64, 65) dans l'espace annulaire (62), par lesquelles l'espace annulaire (62) peut être fermé par déformation du joint d'étanchéité élastomère (16).

9. Réservoir d'eau (1) selon la revendication 1, **caractérisé en ce que** la tubulure de raccordement de filtre annulaire (23), présentant la surface d'étanchéité de filtre (28), de l'élément de raccordement de filtre est constituée au moins dans la zone de la surface d'étanchéité de filtre (28) d'une matière plastique indéformable à la température de fonctionnement, qui est notamment plus solide qu'un élastomère.

10. Réservoir d'eau (1) selon l'une quelconque des revendications précédentes, **caractérisé en ce que** la surface d'étanchéité de filtre (28) forme une surface extérieure, orientée à l'opposé de l'axe central (A) de l'ouverture de sortie de filtre, de la tubulure de raccordement de filtre annulaire (23) de l'élément de raccordement de filtre.

11. Réservoir d'eau (1) selon l'une quelconque des revendications précédentes, **caractérisé en ce que** la tubulure de raccordement de filtre annulaire (23) de l'élément de raccordement de filtre présente une paroi extérieure (71) et/ou une paroi intérieure (72) qui, par rapport à la position de fonctionnement de la cartouche filtrante, sont inclinées par rapport à la verticale d'un angle ω1 et/ou ω2, de telle sorte que la paroi extérieure (71) et la paroi intérieure (72) convergent de haut en bas.

12. Cartouche filtrante (4) qui est pourvue d'un boîtier de cartouche (5) qui sépare un côté intérieur de boîtier d'un côté extérieur de boîtier, il étant prévu une ouverture d'entrée de filtre (40) ouverte en fonctionnement de la cartouche filtrante (4) par rapport à l'environnement extérieur du boîtier de cartouche (5), il étant prévu, par rapport à la direction d'écoulement de l'eau en fonctionnement, à la suite de l'ouverture d'entrée de filtre, un dispositif de conduite d'eau à l'intérieur du boîtier de cartouche (5), qui comprend au moins une chambre de filtre présentant au moins un milieu filtrant et qui se termine dans une ouverture de sortie de filtre pour aspirer l'eau de la cartouche filtrante (4), et il étant prévu une tubulure de raccordement de filtre annulaire (23) pour le raccordement de la cartouche filtrante dans le réservoir d'eau (1), **caractérisée en ce que** la tubulure de raccordement de filtre (23) est réalisée sur un réservoir d'eau selon l'une quelconque des revendications 1 à 11.
